# EUROPEAN PATENT SPECIFICATION

(11) **EP 4 389 545 B1**
(45) Date of publication and mention of the grant of the patent: **21.10.2026**
(21) Application number: 23218742.7
(22) Date of filing: 20.12.2023
(51) Int. Cl.: B60T 11/04, B60T 15/04

(54) **AUXILIARY BRAKING SYSTEM FOR A WORK VEHICLE**
HILFSBREMSSYSTEM FÜR EIN ARBEITSFAHRZEUG
SYSTÈME DE FREINAGE AUXILIAIRE POUR UN VÉHICULE DE TRAVAIL

(30) Priority: 21.12.2022 US 202218085865
(43) Date of publication of application: 26.06.2024
(73) Proprietor: CNH Industrial America LLC, New Holland, PA 17557 (US)
(72) Inventor: PRODDUTURI, Shivakumar, New Holland 17557 (US); IOTTI, Corrado, New Holland 17557 (US)
(74) Representative: CNH Industrial IP Department

(56) References cited:
- EP-A1- 2 457 787
- US-A- 5 119 912
- US-A- 5 180 038

## Description

### FIELD OF THE INVENTION

The present invention generally relates to work vehicles and, more particularly, to an auxiliary braking system for a work vehicle.

### BACKGROUND OF THE INVENTION

It is well known that, to slow or stop the movement of a tractor or other work vehicle, a braking force must be applied to the work vehicle. Traditionally, operators use various manual input devices to apply a braking force to slow or stop the movement of a work vehicle. For example, the operator may use a foot pedal to apply a service braking force to the work vehicle and a hand lever for applying an auxiliary braking force to the work. Recently, autonomous work vehicles have been developed. Such autonomous work vehicles can be controlled without the presence of an operator within the cab. Thus, the operator is not available to actuate the manual input devices for slowing the work vehicle.

Accordingly, an improved auxiliary braking system for a work vehicle would be welcomed.

US5119912A relates to an automatic/mechanical apply park brake distributor. US5180038A relates to an electronically controlled parking brake system. EP2457787A1 relates to an electric cable drive device.

### SUMMARY OF THE INVENTION

Aspects and advantages of the invention will be set forth in part in the following description, or may be obvious from the description, or may be learned through practice of the invention.

In one aspect, the present invention is directed to an auxiliary braking system for a work vehicle including a brake assembly. Furthermore, the auxiliary braking system includes an auxiliary braking actuator configured to selectively activate the brake assembly during auxiliary braking operations. In this respect, the auxiliary braking actuator includes a rod having a first end and second end opposed to the first end. In addition, the first end of the rod defines a chamber. Furthermore, the auxiliary braking system includes a cable assembly. In this respect, the cable assembly includes a first end and a second end opposed to the first end. In addition, the second end of the cable assembly is coupled to the brake assembly. Additionally, the first end of the cable assembly includes a first enlarged head slideably positioned within the chamber. Furthermore, the auxiliary braking system includes a fastener assembly coupled to the rod to retain the first enlarged head within the chamber. Furthermore, when a service braking actuator activates the brake assembly of the auxiliary braking system, the first enlarged head is configured to slide within the chamber.

In another aspect, the present invention is directed to a work vehicle including a traction device. Furthermore, the work vehicle includes a brake assembly. In this respect, the brake assembly is configured to slow movement of the traction device. Furthermore, the work vehicle includes a service braking actuator. In this respect, the service braking actuator is configured to activate the brake assembly during service braking operations.

Furthermore, the work vehicle includes an auxiliary braking actuator. In this respect, the auxiliary braking actuator is configured to selectively activate the brake assembly during auxiliary braking operations. In addition, the auxiliary braking actuator includes a rod having a first end and a second end opposed to the first end. In addition, the first end of the rod defines a chamber. Furthermore, the work vehicle includes a cable assembly. In this respect, the cable assembly includes a first end and a second end opposed to the first end. In addition, the second end of the cable assembly is coupled to the brake assembly. Additionally, the first end of the cable assembly includes a first enlarged head slideably positioned within the chamber. Additionally, the cable assembly includes a fastener assembly coupled to the rod to retain the first enlarged head within the chamber. Furthermore, when a service braking actuator activates the brake assembly of the auxiliary braking system, the first enlarged head is configured to slide within the chamber. These and other features, aspects and advantages of the present invention will become better understood with reference to the following description and appended claims. The accompanying drawings, which are incorporated therein and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a top view of one embodiment of a work vehicle in accordance with aspects of the present invention;
FIG. 2 illustrates a side view of the work vehicle shown in FIG. 1, particularly illustrating various components of the work vehicle in accordance with aspects of the present invention;
FIG. 3 illustrates a perspective view of one embodiment of an auxiliary braking system for a work vehicle in accordance with aspects of the present invention;
FIG. 4 illustrates a partial, exploded perspective view of one embodiment of an auxiliary braking system for a work vehicle in accordance with aspects of the present invention;
FIG. 5 illustrates a cross-sectional view of the auxiliary braking system shown in FIG. 4;
FIG. 6 illustrates an enlarged, partial cross-sectional view of the auxiliary braking system shown in FIGS. 4 and 5, particularly illustrating a chamber of an auxiliary braking actuator of the auxiliary braking system; and
FIG. 7 illustrates another enlarged, partial cross-sectional view of the auxiliary braking actuator shown in FIGS. 4-6, particularly illustrating threading of a rod of the auxiliary braking actuator.

Repeat use of reference characters in the present specification and drawings is intended to represent the same or analogous features or elements of the present invention.

### DETAILED DESCRIPTION OF THE DRAWINGS

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention. For instance, features illustrated or described as part of one embodiment can be used with another embodiment to yield still a further embodiment. Thus, it is intended that the present invention covers such modifications and variations as come within the scope of the appended claims.

In general, the present invention is directed to an auxiliary braking system for a work vehicle. More specifically, the auxiliary braking system includes an auxiliary braking actuator configured to selectively activate a brake assembly of the work vehicle during auxiliary braking operations. The brake assembly is, in turn, configured to slow movement of a traction device(s) of the work vehicle. In several embodiments, the auxiliary braking actuator is automatically controlled (e.g., by a suitable computing system). For example, in one embodiment, the auxiliary braking actuator is a spring-loaded cylinder configured to activate the brake assembly during auxiliary braking operations, such as when the work vehicle is stopped on an inclined surface. In this respect, the auxiliary braking actuator includes a rod having a first and second end, with the first end of the rod extending outward from the actuator and defining a chamber.

Additionally, in several embodiments, the auxiliary braking system includes a cable assembly including a first and second end. The first end of the cable assembly includes a first enlarged head that is slideably positioned within the chamber of the auxiliary braking actuator. Additionally, in several embodiments, the second end of the cable assembly is coupled to the brake assembly. In this respect, during service braking operations (e.g., when the reducing the ground speed of the work vehicle during operation), a separate service braking actuator activates the brake assembly. Such activation of the brake assembly, in turn, causes movement of the cable assembly relative to the auxiliary braking actuator. Thus, the first enlarged end of the cable assembly can slide within the chamber to accommodate movement the such movement of the cable assembly during service braking operations.

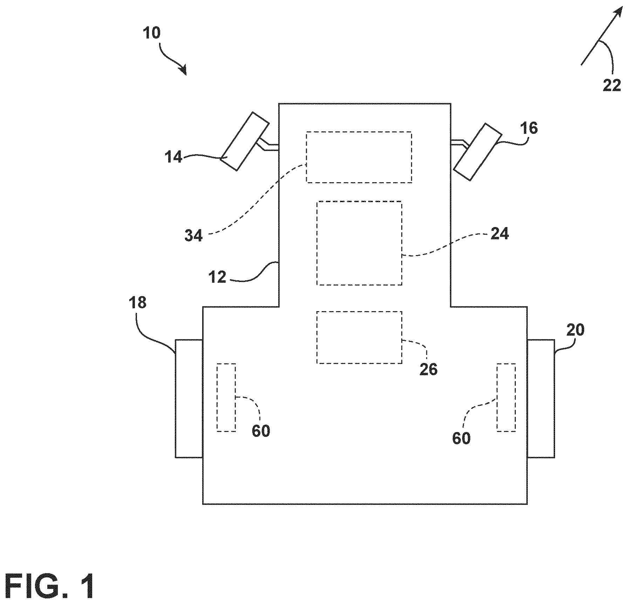

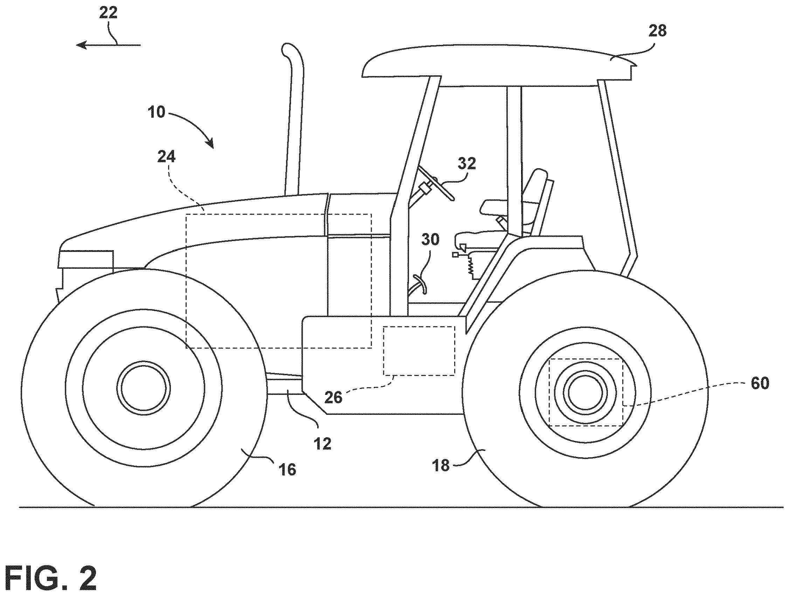

Referring now to the drawings, FIGS. 1 and 2 illustrate differing views of one embodiment of a work vehicle 10 in accordance with the present invention. More specifically, FIGS. 1 and 2 illustrate top and side views of the work vehicle 10, respectively.

As shown, in the illustrated embodiment, the work vehicle 10 is configured as an agricultural tractor. However, in other embodiments, the work vehicle 10 is configured as any other suitable agricultural or other type of work vehicle, such as an agricultural harvester, an agricultural sprayer, a construction vehicle, and/or the like.

As shown in FIGS. 1 and 2, the work vehicle 10 includes a frame or chassis 12 configured to support or couple to a plurality of components. Specifically, in several embodiments, the work vehicle 10 includes one or more traction devices coupled to the frame 12. For example, in the illustrated embodiment, the work vehicle 10 includes a pair of steerable front wheels 14, 16, and a pair of driven rear wheels 18, 20 coupled to the frame 12. The wheels 14, 16 are, in turn, configured to support the work vehicle 10 relative to the ground and move the vehicle 10 in a direction of travel (e.g., as indicated by arrow 22) across a field. In this regard, the work vehicle 10 includes an engine 24 and a transmission 26 mounted on the frame 12. The transmission 26 is operably coupled to the engine 24 and provides variably adjusted gear ratios for transferring engine power to the driven wheels 18, 20. Additionally, an operator's cab 28 (FIG.2) is supported by a portion of the frame 12 and may house various input devices, such as a brake pedal 30 (FIG. 2) and a steering wheel 32 (FIG. 2), for permitting an operator to control the operation of one or more components of the work vehicle 10. However, in alternative embodiments, the work vehicle 10 may include any other suitable component(s) coupled to or supported on the frame 12. For example, in one alternative embodiment, the front wheels 14, 16 may be driven in addition to, or in lieu of, the one or more rear wheels 18, 20.

Furthermore, in several embodiments, the work vehicle 10 includes one or more brake assemblies 60. In general, the brake assembly(ies) 60 is configured to reduce the ground speed of or otherwise slow the movement of the work vehicle 10. For example, in the illustrated embodiment, the work vehicle 10 includes a braking assembly 60 provided in association with each of the driven wheels 18, 20. In this regard, when activated, the braking assemblies 60 reduce the wheel speed of or otherwise slow the rotation of the wheels 18, 20. However, in alternative embodiments, braking assemblies 60 may be provided in operative association with the front wheels 14, 16 in addition to or in lieu of the rear wheels 18, 20.

In general, the brake assembly(ies) 60 is configured to be activated during both service braking operations and auxiliary braking operations of the work vehicle 10. A service braking operation occurs when the braking assembly(ies) 60 is engaged to reduce the ground speed of the work vehicle 10, such as when the work vehicle 10 needs to be slowed to make a turn or avoid an obstacle. In one embodiment, the brake pedal 30 may be used by the operator of the work vehicle 10 to initiate service braking operations. Alternatively, service braking operations may be initiated automatically.

Conversely, auxiliary braking operations correspond to engagement of the braking assemblies 60 occurring at times other than during service braking operations. For example, engagement of the braking assemblies 60 to prevent movement of the work vehicle 10 when parked on a hill or other inclined surface constitutes an auxiliary braking operation. As another example, engagement of the braking assemblies 60 to reduce the ground speed of the work vehicle 10 to make a turn or avoid an obstacle in lieu of service braking operations constitutes an auxiliary braking operation. As still a further example, engagement of the braking assemblies 60 to reduce the ground speed of the work vehicle 10 when service braking operations are unavailable constitutes an auxiliary braking operation.

Additionally, it should be appreciated that the braking assemblies 60 correspond to any suitable device(s) for reducing the wheel speeds of the wheels 18, 20, such as by converting energy associated with the movement of such wheels 18, 20 into heat. For example, in one embodiment, the braking assemblies 60 correspond to a suitable fluid-driven cylinder(s) (not shown), such as a hydraulic cylinder(s), configured to push stationary frictional elements (not shown), such as brake shoes or brake calipers, against rotating elements (not shown), such as brake drums or brake discs. However, it should be appreciated that the braking assemblies 60 correspond to any other suitable hydraulic, pneumatic, mechanical, and/or electrical components configured to convert the rotation of the rotating elements into heat.

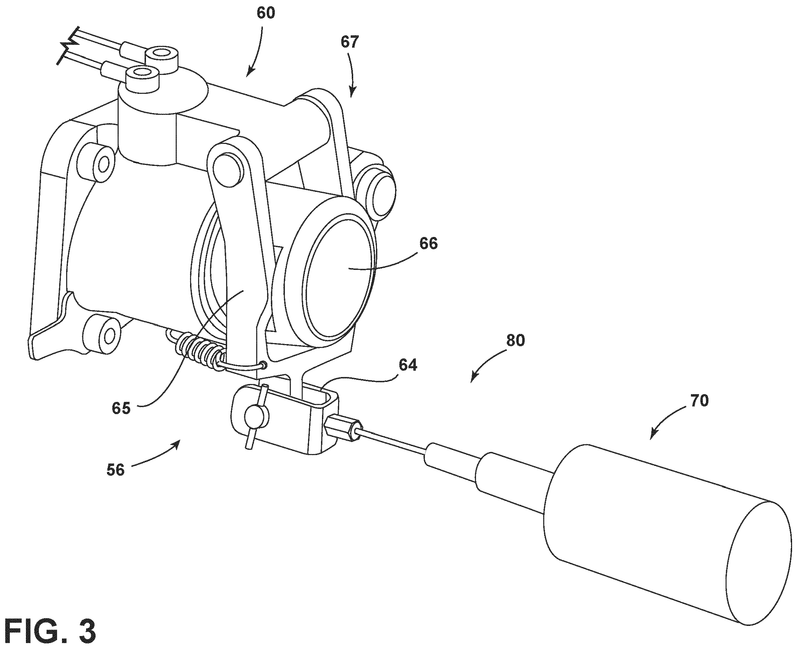

FIG. 3 illustrates a perspective view of one embodiment of an auxiliary braking system 56 of a work vehicle 10. In general, the auxiliary braking system 56 is configured to activate the braking assembly(ies) 60 during auxiliary braking operations. Specifically, in several embodiments, the auxiliary braking system 56 includes an auxiliary braking actuator 70 and a cable assembly 80. The cable assembly 80 is coupled between the auxiliary braking actuator 70 and a brake valve 66 associated with the braking assembly(ies) 60. For example, in one embodiment, the cable assembly 80 may include a clevis 64 that is coupled to an actuation arm 65 of the brake valve 66. In this respect, the cable assembly 80 is configured to transmit movement of the auxiliary braking actuator 70 to the brake valve 66. Such movement actuates the brake valve 66 (e.g., by pivoting the actuation arm 65 of the brake valve 66), which, in turn, supplies brake fluid to the braking assembly(ies) 60 such that the auxiliary braking operation is performed.

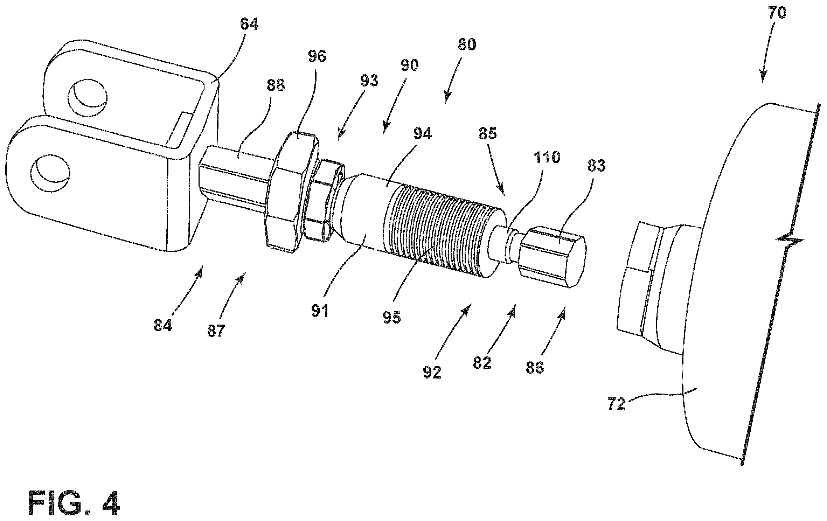

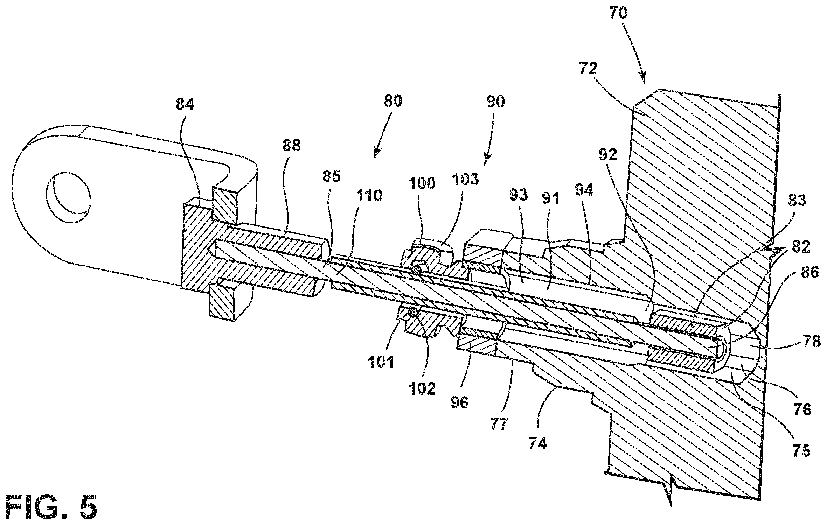

FIGS. 4 and 5 illustrate differing view of the auxiliary braking assembly 56 in accordance with the present invention. More specifically, FIG. 4 illustrates a partial, exploded perspective view of the auxiliary braking system 56. FIG. 5 illustrates a cross-sectional view of the auxiliary braking system 56 shown in FIG. 4. As mentioned above, the auxiliary braking system 56 includes the auxiliary braking actuator 70, which is configured to actuate the brake valve 66 associated with the braking assembly(ies) 60. Specifically, in several embodiments, the auxiliary braking actuator 70 includes a rod 74 having a first end 75 and second end 77 opposed to the first end 75. As shown, the first end 75 of the rod 74 extends outward from the auxiliary braking actuator 70 and defines a chamber 76 therein. Moreover, the first end 75 of the rod 74 is coupled to the cable assembly 80. **In** this respect, when activated, the rod 74 moves relative to the auxiliary braking actuator 70 such that the cable assembly 80 transmits this movement to the brake valve 66.

**In** the illustrated embodiment, the auxiliary braking actuator 70 is configured as a pneumatically actuated spring-loaded cylinder 72. **In** such embodiments, to initiate auxiliary braking operations, a pneumatic force is applied to the spring-loaded cylinder 72. When the pneumatic force is applied to the spring-loaded cylinder 72, the rod 74 extends or retracts relative to the spring-loaded cylinder 72, thereby moving the cable assembly 80 in a manner that pivots the actuation arm 65 (FIG. 3) of the brake valve 66 (FIG. 3). However, it should be appreciated that the auxiliary braking actuator 70 corresponds to any other suitable hydraulic, pneumatic, mechanical, and/or electrical components configured to apply a force to the cable assembly 80.

**In** some embodiments, the auxiliary braking actuator 70 is automatically controlled without human intervention by a computing system (e.g., one or more controllers (not shown)). **In** such embodiments, the computing system may receive an input or other data indicating that an auxiliary braking operation should be performed (e.g., sensor data indicating that the work vehicle 10 is parked on a hill). Thereafter, the computing system may transmit control signals to the auxiliary braking actuator 70 or an associated valve(s) (not shown). Such control signals, in turn, instruct the auxiliary braking actuator 70 or the associated valve(s) to move the rod in a manner that actuates the brake valve 66.

Furthermore, as mentioned above, the auxiliary braking system 56 includes the cable assembly 80. As shown, the cable assembly 80 includes a first end 82 and a second end 84 opposed to the first end 82. More specifically, the first end 82 includes a first enlarged head 83 that is slidably positioned within the chamber 76. As will be described below, the first enlarged head 83 of the cable assembly 80 is slideably positioned within the chamber 76 (FIG. 5) of the auxiliary braking actuator 70 such that when a service braking actuator (not shown) activates the brake assembly 60, the first enlarged head 83 is configured to slide within the chamber 76 (FIG. 5) of the auxiliary braking actuator 70. Furthermore, the second end 84 of the cable assembly 80 is coupled to the clevis 64 of the brake assembly 60 and the first end 82 of the cable assembly 80 including a first enlarged head 83. For example, in the illustrated embodiment, the second end 84 of the cable assembly 80 includes a second enlarged head 88 coupled to the clevis 64. However, in alternative embodiments, the second end 84 of the cable assembly 80 may be coupled to the brake valve 66 in any other suitable manner.

Additionally, in the illustrated embodiment, the cable assembly 80 is configured as a Bowden cable 110. In such an embodiment, the cable assembly 80 includes a cable 85 positioned within a sheath 112. As such, the cable 85 includes a first end 86 and an opposed second end 87. In this respect, the first enlarged head 83 encloses the first end 86 of the cable 85. Similarly, the second enlarged head 88 encloses the second end 87 of the cable 85. However, in alternative embodiments, the cable assembly 80 may be configured in any other suitable manner that allows for the cable assembly 80 to transmit the movement of the auxiliary braking actuator 70 to the brake valve 66.

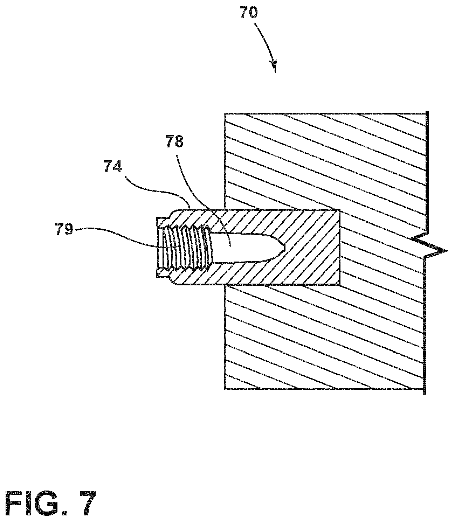

Moreover, in some embodiments, the auxiliary braking system 56 includes a fastener assembly 90. In general, the fastener assembly 90 is configured to couple to the rod 74 to retain the first enlarged head 83 within the chamber 76 of the auxiliary braking actuator 70. For example, in the illustrated embodiment, the fastener assembly 90 includes a sleeve 91 positioned around a portion of the cable assembly 80. The sleeve 91 includes a first end 92 and a second end 93. The first end 92 of the sleeve 91 positioned within the chamber 76 to retain the first enlarged head 83 within the chamber 76. For example, in one embodiment, the sleeve 91 may have an outer surface 94 defining threading 95. Similarly, as shown in FIG. 7, an inner surface 78 of the rod 74 defines threading 79. As such, the outer surface 94 of the sleeve 91 is configured to threadingly engage with an inner surface 78 of the rod 74. Additionally, the fastener assembly 90 may include a nut 96 that threadingly engages the outer surface 94 of the sleeve 91. Thus, by varying the position of the nut 96 along the outer surface 94 of the sleeve 91, the size of the chamber 76 can be adjusted.

Referring again to FIGS. 4 and 5, as mentioned above, the fastener assembly 90 couples the rod 74 and the cable assembly 80 together. In this respect, the cable assembly 80 is configured to transmit the force applied by the rod 74 to the brake valve 66 when an auxiliary braking operation is initiated.

Further in the illustrated embodiment, the auxiliary braking system 56 includes a seal member 101 coupled between the second end 93 of the sleeve 91 and the cable assembly 80 and configured to seal the chamber 76. The seal member 101 is used to prevent dirt and other foreign particles from entering the auxiliary braking actuator 70. In one embodiment, the second end 93 of the sleeve 91 defines an enlarged portion 100 containing the seal member 101. In one further embodiment, the seal member 101 is configured as O-ring 102. In still one further embodiment, the enlarged portion 100 is a hexagonal head 103.

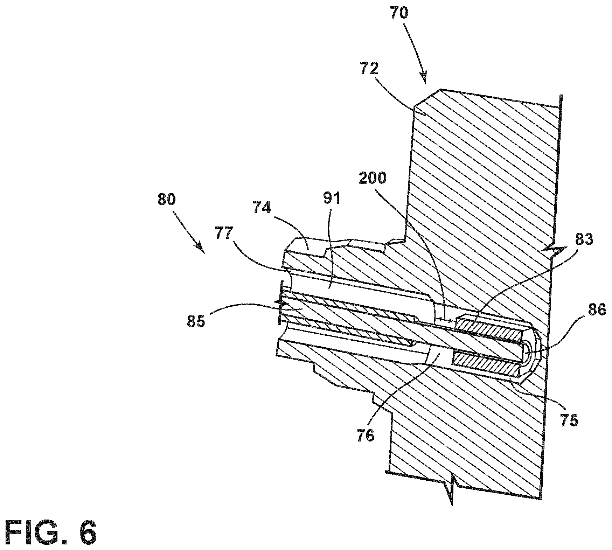

FIG. 6 illustrates an enlarged cross-sectional view of the FIG. 4 embodiment the auxiliary braking system 56. As mentioned above, the first enlarged head 83 is positioned within the chamber 76 defined in the rod 74. Moreover, the first enlarged end 83 and the first end 86 of the cable 85 are configured to slide, as indicated by arrow 200, within the chamber 76 of the rod 74 during service braking operations. More specifically, during service braking operations, the brake valve 66 is activated such that the cable 85 of the cable assembly 80 moves relative to the rod 74. In this respect, the chamber 76 provides clearance for the cable 85 and the first enlarged head 83 coupled thereto to move relative to the rod 74. Thus, the positioning of the first enlarged head 83 within the chamber 74 allow for the auxiliary braking actuator 70 to be unaffected by the actuation of the brake valve 66 or other components of the braking assembly 60 during service braking operations.

Additionally, the sleeve 91 of the fastener assembly 90 is configured to confine the movement of the first enlarged head 83 and the first end 86 of the cable 85 within the chamber 76 of the rod 74 of the spring-loaded cylinder 72 as seen in the illustrated embodiment. During auxiliary braking operations, a force activates the brake assembly 60 (FIG. 3) such that the brake assembly 60 applies a force to the cable assembly 80. The force applied to the cable assembly 80 moves the first enlarged head 83 and the first end 86 of the cable 85 within the chamber 76 toward the first end 75 of the rod 74.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. An auxiliary braking system (56) for a work vehicle (10), the auxiliary braking system (56) comprising:
a brake assembly (60);
an auxiliary braking actuator (70) configured to selectively activate the brake assembly (60) during auxiliary braking operations, the auxiliary braking actuator (70) including a rod (74) having a first end (75) and second end (77) opposed to the first end (75), the first end (75) of the rod (74) defining a chamber (76);
a cable assembly (80) including a first end (82) and a second end (84) opposed to the first end, the second end of the cable assembly (80) coupled to the brake assembly (60), the first end (82) of the cable assembly (80) including a first enlarged head (83) slidably positioned within the chamber (76); and
a fastener assembly (90) coupled to the rod (74) to retain the first enlarged head (83) within the chamber (76), **characterized in that**:
when the brake assembly (60) is activated during service braking operations, the first enlarged head (83) is configured to slide within the chamber (76).

2. The auxiliary braking system (56) of claim 1, wherein the fastener assembly (60) comprises a sleeve (91) positioned around a portion of the cable assembly (80), the sleeve (91) including a first end (92) and a second end (93) opposed to the first end (92), the first end (92) of the sleeve (91) being positioned within the chamber (76) to retain the first enlarged head (83) within the chamber (76).

3. The auxiliary braking system (56) of claim 2, wherein an outer surface (94) of the first end (92) of the sleeve (91) threadingly engages an inner surface (78) of the rod (74).

4. The auxiliary braking system (56) of claim 3, wherein the fastener assembly (60) further comprises a nut (96) that threadingly engages an outer surface (94) of the sleeve (91).

5. The auxiliary braking system (56) of claim 4, the second end (84) of the cable assembly (80) including a second end (87) of the cable (85) and a second enlarged head (88), wherein the second enlarged head (88) encloses the second end (87) of the cable (85).

6. The auxiliary braking system (56) of claim 5, the first end (82) of the cable assembly (80) further including a first end (86) of the cable (85), wherein the first enlarged head (83) encloses the first end (86) of the cable (85).

7. The auxiliary braking system (56) of any preceding claim, further comprising:
a seal member (101) coupled between the second end (93) of the sleeve (91) and the cable assembly (80), the seal member (101) configured to seal the chamber (76).

8. The auxiliary braking system (56) of claim 7, the second end (93) of the sleeve (91) defining an enlarged portion (100) containing the seal member (101).

9. The auxiliary braking system (56) of any of claims 7 or 8, wherein the seal member (101) comprises an o-ring (102).

10. The auxiliary braking system (56) of any of claims 7 to 9, wherein the cable assembly (80) comprises a Bowden cable (110).

11. The auxiliary braking system (56) of any preceding claim, wherein the brake assembly (60) comprises a clevis (64) coupled to the second end (84) of the cable assembly (80).

12. A work vehicle (10), comprising:
a traction device;
a service braking actuator configured to activate the brake assembly (60) during service braking operations; and,
the auxiliary braking system (56) for the work vehicle (10) of any preceding claim.

## Patentansprüche

1. Hilfsbremssystem (56) für ein Arbeitsfahrzeug (10), wobei das Hilfsbremssystem (56) umfasst:
eine Bremsanordnung (60);
einen Hilfsbremsaktuator (70), der konfiguriert ist, um die Bremsanordnung (60) während Hilfsbremsvorgängen selektiv zu aktivieren, wobei der Hilfsbremsaktuator (70) eine Stange (74) einschließt, die ein erstes Ende (75) und ein dem ersten Ende (75) gegenüberliegendes zweites Ende (77) aufweist, wobei das erste Ende (75) der Stange (74) eine Kammer (76) definiert;
eine Seilzuganordnung (80), die ein erstes Ende (82) und ein dem ersten Ende gegenüberliegendes zweites Ende (84) einschließt, wobei das zweite Ende der Seilzuganordnung (80) an die Bremsanordnung (60) gekoppelt ist, wobei das erste Ende (82) der Seilzuganordnung (80) einen ersten vergrößerten Kopf (83) einschließt, der verschiebbar innerhalb der Kammer (76) positioniert ist; und
eine Befestigungselementanordnung (90), die an die Stange (74) gekoppelt ist, um den ersten vergrößerten Kopf (83) in der Kammer (76) zu halten, **dadurch gekennzeichnet, dass**:
wenn die Bremsanordnung (60) während Betriebsbremsvorgängen aktiviert wird, der erste vergrößerte Kopf (83) konfiguriert ist, um innerhalb der Kammer (76) zu gleiten.

2. Hilfsbremssystem (56) nach Anspruch 1, wobei die Befestigungselementanordnung (60) eine Hülse (91) umfasst, die um einen Abschnitt der Seilzuganordnung (80) positioniert ist, wobei die Hülse (91) ein erstes Ende (92) und ein dem ersten Ende (92) gegenüberliegendes zweites Ende (93) einschließt, wobei das erste Ende (92) der Hülse (91) innerhalb der Kammer (76) positioniert ist, um den ersten vergrößerten Kopf (83) innerhalb der Kammer (76) zu halten.

3. Hilfsbremssystem (56) nach Anspruch 2, wobei eine Außenoberfläche (94) des ersten Endes (92) der Hülse (91) mit einer Innenoberfläche (78) der Stange (74) in Gewindeeingriff steht.

4. Hilfsbremssystem (56) nach Anspruch 3, wobei die Befestigungselementanordnung (60) ferner eine Mutter (96) umfasst, die mit einer Außenoberfläche (94) der Hülse (91) in Gewindeeingriff steht.

5. Hilfsbremssystem (56) nach Anspruch 4, wobei das zweite Ende (84) der Seilzuganordnung (80) ein zweites Ende (87) des Seilzugs (85) und einen zweiten vergrößerten Kopf (88) einschließt, wobei der zweite vergrößerte Kopf (88) das zweite Ende (87) des Seilzugs (85) umschließt.

6. Hilfsbremssystem (56) nach Anspruch 5, wobei das erste Ende (82) der Seilzuganordnung (80) ferner ein erstes Ende (86) des Seilzugs (85) einschließt, wobei der erste vergrößerte Kopf (83) das erste Ende (86) des Seilzugs (85) umschließt.

7. Hilfsbremssystem (56) nach einem der vorstehenden Ansprüche, ferner umfassend:
ein Dichtungselement (101), das zwischen dem zweiten Ende (93) der Hülse (91) und der Seilzuganordnung (80) gekoppelt ist, wobei das Dichtungselement (101) konfiguriert ist, um die Kammer (76) abzudichten.

8. Hilfsbremssystem (56) nach Anspruch 7, wobei das zweite Ende (93) der Hülse (91) einen vergrößerten Abschnitt (100) definiert, der das Dichtungselement (101) enthält.

9. Hilfsbremssystem (56) nach einem der Ansprüche 7 oder 8, wobei das Dichtungselement (101) einen O-Ring (102) umfasst.

10. Hilfsbremssystem (56) nach einem der Ansprüche 7 bis 9, wobei die Seilzuganordnung (80) einen Bowdenzug (110) umfasst.

11. Hilfsbremssystem (56) nach einem der vorstehenden Ansprüche, wobei die Bremsanordnung (60) einen Gabelkopf (64) umfasst, der an das zweite Ende (84) der Seilzuganordnung (80) gekoppelt ist.

12. Arbeitsfahrzeug (10), umfassend:
eine Zugvorrichtung;
einen Betriebsbremsaktuator, der konfiguriert ist, um die Bremsanordnung (60) während Betriebsbremsvorgängen zu aktivieren; und
das Hilfsbremssystem (56) für das Arbeitsfahrzeug (10) nach einem der vorstehenden Ansprüche.

## Revendications

1. Système de freinage auxiliaire (56) pour un véhicule de travail (10), le système de freinage auxiliaire (56) comprenant :
un ensemble frein (60) ;
un actionneur de freinage auxiliaire (70) conçu pour activer sélectivement l'ensemble frein (60) pendant des opérations de freinage auxiliaire, l'actionneur de freinage auxiliaire (70) comportant une tige (74) ayant une première extrémité (75) et une seconde extrémité (77) opposée à la première extrémité (75), la première extrémité (75) de la tige (74) définissant une chambre (76) ;
un ensemble câble (80) comportant une première extrémité (82) et une seconde extrémité (84) opposée à la première extrémité, la seconde extrémité de l'ensemble câble (80) accouplée à l'ensemble frein (60), la première extrémité (82) de l'ensemble câble (80) comportant une première tête élargie (83) positionnée de manière coulissante à l'intérieur de la chambre (76) ; et
un ensemble fixation (90) accouplé à la tige (74) pour retenir la première tête élargie (83) à l'intérieur de la chambre (76), **caractérisé en ce que** :
lorsque l'ensemble frein (60) est activé pendant des opérations de freinage de service, la première tête élargie (83) est conçue pour coulisser à l'intérieur de la chambre (76).

2. Système de freinage auxiliaire (56) selon la revendication 1, dans lequel l'ensemble fixation (60) comprend un manchon (91) positionné autour d'une partie de l'ensemble câble (80), le manchon (91) comportant une première extrémité (92) et une seconde extrémité (93) opposée à la première extrémité (92), la première extrémité (92) du manchon (91) étant positionnée à l'intérieur de la chambre (76) pour retenir la première tête élargie (83) à l'intérieur de la chambre (76).

3. Système de freinage auxiliaire (56) selon la revendication 2, dans lequel une surface externe (94) de la première extrémité (92) du manchon (91) vient en prise par filetage avec une surface interne (78) de la tige (74).

4. Système de freinage auxiliaire (56) selon la revendication 3, dans lequel l'ensemble fixation (60) comprend en outre un écrou (96) qui vient en prise par filetage avec une surface externe (94) du manchon (91).

5. Système de freinage auxiliaire (56) selon la revendication 4, la seconde extrémité (84) de l'ensemble câble (80) comportant une seconde extrémité (87) du câble (85) et une seconde tête élargie (88), dans lequel la seconde tête élargie (88) entoure la seconde extrémité (87) du câble (85).

6. Système de freinage auxiliaire (56) selon la revendication 5, la première extrémité (82) de l'ensemble câble (80) comportant en outre une première extrémité (86) du câble (85), dans lequel la première tête élargie (83) entoure la première extrémité (86) du câble (85).

7. Système de freinage auxiliaire (56) selon l'une quelconque revendication précédente, comprenant en outre :
un élément d'étanchéité (101) accouplé entre la seconde extrémité (93) du manchon (91) et l'ensemble câble (80), l'élément d'étanchéité (101) étant conçu pour étanchéifier la chambre (76).

8. Système de freinage auxiliaire (56) selon la revendication 7, la seconde extrémité (93) du manchon (91) définissant une partie élargie (100) contenant l'élément d'étanchéité (101).

9. Système de freinage auxiliaire (56) selon l'une quelconque des revendications 7 ou 8, dans lequel l'élément d'étanchéité (101) comprend un joint torique (102).

10. Système de freinage auxiliaire (56) selon l'une quelconque des revendications 7 à 9, dans lequel l'ensemble câble (80) comprend un câble Bowden (110).

11. Système de freinage auxiliaire (56) selon l'une quelconque revendication précédente, dans lequel l'ensemble frein (60) comprend un maillon d'attache (64) accouplé à la seconde extrémité (84) de l'ensemble câble (80).

12. Véhicule de travail (10), comprenant :
un dispositif de traction ;
un actionneur de frein de service conçu pour activer l'ensemble frein (60) pendant des opérations de freinage de service ; et
le système de freinage auxiliaire (56) pour le véhicule de travail (10) selon l'une quelconque revendication précédente.
